# FASCICULE DE BREVET EUROPEEN

(11) **EP 0 702 443 B1**
(45) Date de publication et mention de la délivrance du brevet: **07.07.1999**
(21) Numéro de dépôt: 95402063.2
(22) Date de dépôt: 12.09.1995
(51) Int. Cl.: H02G 3/12

(54) **Dispositif de support pour appareillage à rapporter sur un corps de goulotte**
Geräteträgereinrichtung Einzubringen auf einen Kabelkanalkörper
Supporting device for an apparatus to be mounted on a ducting body

(30) Priorité: 13.09.1994 FR 9410894
(43) Date de publication de la demande: 20.03.1996
(73) Titulaire: LEGRAND, 87045 Limoges (FR); LEGRAND SNC, F-87045 Limoges (FR)
(72) Inventeur: Perrignon de Troyes, François, 72140 Mont Saint Jean (FR); Decore, Bertrand, F-72650 La Chapelle Saint Aubin (FR)
(74) Mandataire: CABINET BONNET-THIRION

(56) Documents cités:
- DE-A- 4 120 939
- FR-A- 2 698 738

## Description

La présente invention concerne d'une manière générale les dispositifs de support mis en oeuvre pour rapporter un quelconque appareillage, et, par exemple, un quelconque appareillage électrique, sur un corps de goulotte, et elle vise plus particulièrement, mais non nécessairement exclusivement, le cas où ce corps de goulotte présente deux retours dirigés l'un vers l'autre, que ces retours appartiennent à ses ailes latérales, en s'étendant par exemple le long du bord libre de ces ailes latérales, ou que l'un et/ou l'autre d'entre eux appartiennent à une cloison intermédiaire entre celles-ci.

Ces retours, qui sont le plus souvent conformés en gouttière, sont normalement prévus pour assurer l'encliquetage d'un couvercle.

Mais il peut également en être tiré profit pour la mise en place, localement, en substitution à un tel couvercle, d'un dispositif de support propre à recevoir l'appareillage à fixer.

Un tel dispositif de support se trouve notamment décrit dans la demande de brevet français qui, déposée le 1er décembre 1992 sous le No 92 14441, a été publiée sous le No 2 698 738.

Il comporte, globalement, un socle, qui est propre à recevoir l'appareillage concerné, et qui, sur deux côtés opposés, au moins, présente des moyens de rainure, qui sont propres à son engagement sur les retours du corps de goulotte à équiper, et qui, de ce fait, constituent des moyens d'emboîtement, et, plus précisément, des moyens d'emboîtement femelles, les retours du corps de goulotte constituant dans ce cas des moyens d'emboîtement mâles.

L'un des problèmes à résoudre dans la réalisation des dispositifs de support de ce type, qui se retrouve d'ailleurs pour les dispositifs de support à fixer, non pas sur des retours présents sur le corps de goulotte en façade ou sur ses ailes latérales, mais sur les nervures qu'il comporte usuellement en saillie sur son fond, est de prévoir des moyens de nature à s'opposer à tout glissement longitudinal intempestif de leur part le long du corps de goulotte, notamment lorsqu'ils sont à leur place définitive sur ce corps de goulotte et que, d'un de leurs côtés au moins, un couvercle est dûment rapporté sur ce dernier.

Pour les dispositifs de support à rapporter sur des nervures en saillie sur le fond d'un corps de goulotte, par exemple, des solutions très diverses ont été apportées à ce problème, qui, toutes, sont relativement complexes, et dont la plupart nécessitent, pour leur mise en oeuvre, l'usage d'un outil.

Pour les dispositifs de support à rapporter sur les retours que présente en façade un corps de goulotte, il a également été proposé une solution exigeant un outil pour sa mise en oeuvre.

Suivant cette solution, le socle du dispositif de support ne comporte pas réellement de moyens de rainure : il présente simplement deux prolongements latéraux, par lesquels il vient s'appliquer par le dessus sur les retours du corps de goulotte, et, pour chacun de ces prolongements latéraux, il est équipé d'au moins un verrou quart de tour, qu'il est nécessaire de manoeuvrer à l'aide d'un outil, et qui, par rotation, vient se prendre sous le retour correspondant du corps de goulotte, en pinçant celui-ci entre lui et le prolongement latéral auquel il est associé.

Dans la demande de brevet français No 92 14441, il est prévu, dans les moyens de rainure du socle, des lamelles élastiquement déformables, qui, par leur extrémité libre, en pratique plane, viennent porter sur les retours du corps de goulotte.

Mais si, à la rigueur, ces lamelles élastiquement déformables peuvent dans une certaine mesure s'opposer par frottement au glissement longitudinal du dispositif de support le long du corps de goulotte, elles sont essentiellement prévues pour plaquer élastiquement en façade le socle de ce dispositif de support contre les retours du corps de goulotte, en absorbant ainsi systématiquement tout éventuel jeu de montage entre lui et ces retours.

De ce fait, ces lamelles élastiquement déformables s'étendent suivant l'épaisseur même du flanc le plus interne des moyens de rainure, à la faveur d'une découpe prévue à cet effet dans ce flanc, et elles interviennent suivant une direction qui est perpendiculaire à la direction, dite ci-après par simple commodité direction d'emboîtement, suivant laquelle se fait l'engagement de ces moyens de rainure sur les retours du corps de goulotte.

En outre, leur intervention reste indifféremment la même, que le dispositif de support soit seul présent sur les retours du corps de goulotte ou qu'il y soit flanqué par au moins un couvercle.

Dans la demande de brevet allemand No 41 20 939, les moyens de rainure du socle sont formés entre un rebord de celui-ci et des pattes élastiquement déformables par lesquelles il peut être encliqueté sur les retours du corps de goulotte suivant une direction d'emboîtement perpendiculaire à ces retours, et, en saillie sur la surface inférieure de ce rebord, sont prévus des ergots, qui coopèrent en emboîtement avec des trous complémentaires prévus à cet effet sur le corps de goulotte.

Ces ergots ne peuvent donc intervenir que ponctuellement, de place en place, à des endroits prédéterminés du corps de goulotte, et, en cela, ils constituent des moyens de positionnement.

Ils s'opposent en pratique à tout ajustement en continu de la position du dispositif de support le long du corps de goulotte, et, d'une manière plus générale, à tout déplacement de ce dispositif de support le long de ce corps de goulotte sans sa dépose préalable par rapport à celui-ci.

Ils imposent, en outre, de disposer effectivement de trous complémentaires sur le corps de goulotte, ce qui limite la mise en oeuvre du dispositif de support concerné aux seuls corps de goulotte présentant de tels trous, et ce qui complique de manière dispendieuse la fabrication de ces corps de goulotte.

La présente invention a d'une manière générale pour objet une disposition permettant d'éviter ces inconvénients et conduisant en outre à d'autres avantages.

De manière plus précise, elle a pour objet un dispositif de support pour appareillage à rapporter sur un corps de goulotte, ce dispositif de support étant du genre comportant, sur deux côtés opposés, au moins, des moyens d'emboîtement par lesquels il est apte à venir en prise avec des moyens d'emboîtement complémentaires que comporte ce corps de goulotte, et étant d'une manière générale caractérisé en ce que, pour l'un au moins des côtés du socle présentant des moyens d'emboîtement, il est prévu, en association avec ces moyens d'emboîtement, et en saillie suivant leur direction d'emboîtement, pour faire frein sur la partie correspondante du corps de goulotte, des moyens d'ancrage, c'est-à-dire, par analogie avec une ancre de navire, des moyens qui, tout en étant de nature à autoriser initialement un éventuel ripage le long de la surface au contact de laquelle ils se trouvent, sont aptes à assurer in fine une immobilisation par rapport à celle-ci.

En venant en quelque sorte griffer la partie du corps de goulotte avec laquelle ils sont en prise, ces moyens d'ancrage sont aptes ici à pouvoir s'opposer in fine de manière efficace à tout glissement longitudinal intempestif du dispositif de support le long de ce corps de goulotte.

Ils se distinguent ainsi fondamentalement des lamelles élastiquement déformables décrites dans la demande de brevet français FR-A-2 698 738, qui, d'ailleurs, peuvent être concurremment prévues, si désiré, pour leur fonction propre de rattrapage de jeu perpendiculairement à la direction d'emboîtement.

En outre, et à la différence, encore, de ces lamelles élastiquement déformables, l'intervention des moyens d'ancrage suivant l'invention se trouve avantageusement durcie lorsque le dispositif de support se trouve flanqué par au moins un couvercle.

En effet, en prise alors avec l'un et l'autre des deux retours correspondants du corps de goulotte, ce couvercle sollicite en direction l'un de l'autre ces retours, et, donc, presse ces retours contre les moyens d'ancrage prévus suivant l'invention.

Ainsi, si, en l'absence de couvercle, il est en pratique encore facilement possible de déplacer de manière continue le dispositif de support suivant l'invention le long du corps de goulotte, sans qu'il soit nécessaire pour ce faire de procéder à sa dépose ni même à la dépose de l'appareillage, - et, en cela, les moyens d'ancrage suivant l'invention se distinguent fondamentalement des moyens de positionnement que constituent les ergots de la demande de brevet allemand No 41 20 939 -, tout déplacement longitudinal de même type est par contre beaucoup plus difficile lorsque, à proximité, un couvercle, au moins, est conjointement en place sur ce corps de goulotte.

De plus, les moyens d'ancrage suivant l'invention interviennent avantageusement d'eux-mêmes, sans que l'usage d'un quelconque outil soit nécessaire pour leur mise en oeuvre.

Suivant une forme particulière, et préférée, de réalisation, les moyens d'ancrage suivant l'invention appartiennent à une lamelle, par exemple une lamelle métallique, qui, formée d'une pièce distincte, est dûment rapportée sur une paroi, dûment choisie, du dispositif de support, et, en pratique, cette lamelle étant allongée longitudinalement par rapport aux moyens d'emboîtement, ces moyens d'ancrage sont formés par les extrémités de cette lamelle, celles-ci étant à cet effet recourbées en direction opposée à la paroi qui la porte.

En pratique, également, les moyens d'ancrage suivant l'invention mettent en oeuvre une déformation élastique de la lamelle qui les constitue, ce qui permet avantageusement de compenser de manière systématique et très simple les éventuelles tolérances de fabrication entre le dispositif de support suivant l'invention et le corps de goulotte à équiper.

Les caractéristiques et avantages de l'invention ressortiront d'ailleurs de la description qui va suivre, à titre d'exemple, en référence aux dessins schématiques annexés sur lesquels :
la figure 1 est une vue en perspective d'une goulotte sur le corps de laquelle est rapporté un dispositif de support suivant l'invention ;
la figure 2 est, à échelle supérieure, et avec un arrachement local, une vue en perspective de ce dispositif de support, représenté isolément ;
la figure 3 en est, à échelle encore supérieure, une vue partielle en coupe transversale, suivant la ligne III-III de la figure 2 ;
la figure 4 en est, à la même échelle, une autre vue partielle en coupe transversale, suivant la ligne IV-IV de la figure 3 ;
la figure 5 reprend, à échelle supérieure, le détail de la figure 3 repéré par un encart V sur cette figure 3 ;
la figure 6 est, à l'échelle de la figure 5, une vue en élévation, suivant la flèche VI de la figure 5, de la lamelle dont les extrémités constituent les moyens d'ancrage équipant le dispositif de support suivant l'invention, représentée isolément ;
la figure 7 est une vue en coupe longitudinale de cette lamelle, suivant la ligne brisée VII-VII de la figure 6 ;
la figure 8 en est une vue de bout, suivant la flèche VIII de la figure 6.

Ces figures illustrent, à titre d'exemple, l'application de l'invention à un dispositif de support 10 destiné à être rapporté sur un corps de goulotte 11 présentant en façade deux retours 12 dirigés l'un vers l'autre le long du bord libre de ses ailes latérales 14.

Un tel corps de goulotte 11 étant bien connu par lui-même, et ne relevant pas de la présente invention, il ne sera pas décrit dans tous ses détails ici.

Il en est de même en ce qui concerne le ou les couvercles 15 qui, adaptés à le fermer, forment avec lui une goulotte 16.

Il suffira d'indiquer que, dans la forme de réalisation représentée, les retours 12 du corps de goulotte 11 sont globalement conformés en gouttière, le long, au moins, de leur bord libre, et qu'ils sont ainsi propres à l'encliquetage de cordons prévus à cet effet en saillie au dos du ou des couvercles 15.

De manière connue en soi, le corps de goulotte 11 est un tronçon de profilé, et il en est de même du ou des couvercles 15.

De manière également connue en soi, le dispositif de support 10 est substitué localement à un tel couvercle 15.

Par exemple, et tel que représenté, il est inséré entre deux couvercles 15, formés chacun d'un tronçon de profilé.

Le dispositif de support 10 ne sera pas non plus décrit dans tous ses détails ici.

Seuls en seront décrits les éléments nécessaires à la compréhension de l'invention.

De manière connue en soi, ce dispositif de support 10 comporte, globalement, un socle 17, qui, à la faveur d'un évidement central 18, de contour circulaire dans la forme de réalisation représentée, est propre à recevoir un quelconque appareillage, non représenté, et, par exemple, un quelconque appareillage électrique, et qui, sur deux côtés diamétralement opposés l'un par rapport à l'autre, au moins, présente, suivant des dispositions décrites plus en détail ultérieurement, des moyens d'emboîtement 20 par lesquels il est apte à venir en prise avec les retours 12 que comporte le corps de goulotte 11, ces retours 12 constituant à cet égard des moyens d'emboîtement complémentaires de ces moyens d'emboîtement 20.

Dans la forme de réalisation représentée, le socle 17 comporte, globalement, d'une part, un cadre 21, de contour globalement rectangulaire, qui présente l'évidement central 18, et, d'autre part, en saillie au dos de ce cadre 21, perpendiculairement à celui-ci, une paroi 22, qui, dans la forme de réalisation représentée, s'étend de manière sensiblement continue tout autour de l'évidement central 18.

Dans la forme de réalisation représentée, cette paroi 22 a, en plan, un contour globalement rectangulaire, à l'image de celui du cadre 21.

Mais, dans la partie médiane 23 de chacun des deux côtés du socle 17 présentant des moyens d'emboîtement 20, elle comporte, localement, en oblique, de part et d'autre d'un même pan central, deux pans latéraux.

Elle est donc, localement, globalement convexe dans cette partie médiane 23.

Autrement dit, elle forme latéralement des dégagements.

Le long des deux côtés du socle 17 présentant des moyens d'emboîtement 20, la paroi 22 est en outre en retrait par rapport au bord correspondant du cadre 21, et, en pratique, ces moyens d'emboîtement 20 sont constitués par des moyens de rainure, dont la partie en porte à faux du cadre 21 par rapport à la paroi 22 forme le flanc externe 24 et dont le flanc interne 25 est conjointement formé par deux consoles 25', 25'' que la paroi 22 porte en saillie vers l'extérieur, à distance l'une de l'autre, de part et d'autre de sa partie médiane 23, parallèlement au cadre 21, et à un même niveau par rapport à celui-ci.

La distance D1 séparant du cadre 21 ces consoles 25', 25", ou, autrement dit, la distance, mesurée intérieurement, séparant l'un de l'autre le flanc externe 24 et le flanc interne 25 des moyens de rainure constituant les moyens d'emboîtement 20, est sensiblement égale à l'épaisseur D2 des retours 12 du corps de goulotte 11, mesurée perpendiculairement au fond de ce corps de goulotte 11, le long de l'extrémité libre, conformée en gouttière, de ces retours 12, tout en étant légèrement supérieure à cette épaisseur D2.

Corollairement, la distance L1 séparant l'un de l'autre, de l'un à l'autre des deux côtés du socle 17 présentant des moyens d'emboîtement 20, les fonds 26 des moyens de rainure constituant ces moyens d'emboîtement 20, est sensiblement égale à celle, L2, séparant l'une de l'autre les deux tranches 27 des retours 12 du corps de goulotte 11, tout en étant légèrement supérieure à cette distance L2.

Dans la forme de réalisation représentée, et à titre d'exemple, le fond 26 des moyens de rainure constituant les moyens d'emboîtement 20 est directement formé par la paroi 22.

Le profil de ce fond 26 est donc plus ou moins tourmenté, à l'image de cette paroi 22, et à raison, notamment, de sa partie médiane 23 globalement convexe.

Il va de soi, cependant, que tout en pouvant présenter ainsi une partie médiane globalement convexe, le fond 26 des moyens de rainure constituant les moyens d'emboîtement 20 peut être formé par une paroi distincte de la paroi 22, notamment lorsque, pour une largeur de l'ensemble accrue, ces moyens d'emboîtement 20 sont établis à distance de cette paroi 22.

Quoi qu'il en soit, et ainsi qu'il est aisé de le comprendre, l'engagement, sur les retours 12 du corps de goulotte 11, des moyens de rainure constituant les moyens d'emboîtement 20 se fait suivant une direction, dite ici par simple commodité direction d'emboîtement, qui est parallèle aux flancs 24, 25 de ces moyens de rainure, et qui est donc parallèle tant au cadre 21 du socle 17 qu'au fond du corps de goulotte 11.

Le long des deux autres côtés du socle 17, c'est-à-dire le long des deux côtés de ce socle 17 croisés à angle droit avec ceux présentant des moyens d'emboîtement 20, la paroi 22 peut s'étendre au ras du cadre 21.

Dans la forme de réalisation représentée, elle y est cependant également en retrait par rapport aux bords correspondants de ce cadre 21.

Elle y est en outre rectiligne.

Suivant l'invention, pour l'un au moins des côtés du socle 17 présentant des moyens d'emboîtement 20, et, en pratique, pour chacun de ceux-ci, il est prévu, en association avec ces moyens d'emboîtement 20, et en saillie suivant leur direction d'emboîtement, pour faire frein sur la partie correspondante du corps de goulotte 11, des moyens d'ancrage 28.

En pratique, les moyens d'emboîtement 20 étant formés par des moyens de rainure, ces moyens d'ancrage 28 sont en saillie sur le fond 26 de ceux-ci, et ils sont destinés à faire frein sur les retours 12 du corps de goulotte 11, et, plus précisément, sur la tranche 27 de ces retours 12.

Dans la forme de réalisation représentée, les moyens d'ancrage 28 appartiennent à une lamelle 29, qui, formée d'une pièce distincte, est dûment rapportée sur une paroi, dûment choisie, du dispositif de support 10, en l'espèce la paroi 22 de son socle 17.

En pratique, cette lamelle 29 est allongée longitudinalement par rapport aux moyens d'emboîtement 20 auxquels elle est associée, et les moyens d'ancrage 28 sont formés par ses extrémités 30, celles-ci étant à cet effet recourbées en direction opposée à la paroi 22 qui la porte.

L'une au moins des extrémités 30 de la lamelle 29 formant les moyens d'ancrage 28, et, en pratique, chacune de ces extrémités 30, présente une tranche 32 droite, sensiblement parallèlement au fond 26 des moyens de rainure constituant les moyens d'emboîtement 20, et cette tranche 32 s'étend transversalement par rapport à ces moyens d'emboîtement 20.

C'est cette tranche 32 qui forme en propre les moyens d'ancrage 28.

Par elle-même, la lamelle 29 est élastiquement déformable.

Pour bénéficier, cependant, d'une élasticité supplémentaire, elle s'écarte de la paroi 22 qui la porte, au voisinage, au moins, de ses extrémités 30.

En pratique, dans la forme de réalisation représentée, la lamelle 29 présente, d'une part, une partie médiane 33, par laquelle elle est rapportée sur la paroi 22, en étant en pratique adossée à cette paroi 22, et, plus précisément, à la partie médiane 23 globalement convexe de celle-ci, et, d'autre part, disposées chacune respectivement de part et d'autre de sa partie médiane 33, au droit des dégagements formés latéralement par la paroi 22, deux branches latérales 34, qui s'étendent chacune librement en porte à faux à compter de la partie médiane 33, en formant avec cette partie médiane 33 un dièdre dont la concavité est tournée vers la paroi 22 et dont l'angle A est suffisamment ouvert pour qu'elles s'écartent chacune progressivement de cette dernière, de part et d'autre de sa partie médiane 23.

Par exemple, et tel que représenté, cet angle A est supérieur à 165°, en étant en pratique voisin de 170°.

Quoi qu'il en soit, il est ainsi tiré profit des dégagements que forme à cet endroit la paroi 22 du socle 17 du fait de son contour localement convexe pour laisser une liberté de débattement angulaire aux branches latérales 34 de la lamelle 29, au bénéfice du jeu élastique de celle-ci, et sans augmentation de l'encombrement transversal de l'ensemble.

Quoi qu'il en soit, également, les extrémités 30 de la lamelle 29 sont, dans la forme de réalisation représentées, repliées sensiblement à 90° par rapport à sa partie médiane 33, en se raccordant chacune par un large arrondi à la branche latérale 34 correspondante.

Dans la forme de réalisation représentée, les branches latérales 34 de la lamelle 29 ont, sur une partie au moins de leur longueur à compter de la tranche 32 de leur extrémité 30, une largeur L3 réduite par rapport à celle L4 de la partie médiane 33.

Pour sa fixation à la paroi 22 qui la porte, la lamelle 29 comporte, en saillie à son dos, dans la forme de réalisation représentée, au moins une patte 35, par laquelle elle est librement engagée à force dans une fente 36 de cette paroi 22.

En pratique, la lamelle 29 comporte, à distance l'une de l'autre, en saillie sur sa partie médiane 33, au dos de celle-ci, et sensiblement perpendiculairement à cette partie médiane 33, deux pattes 35, formées chacune à la faveur d'un ajour 38 de sa partie médiane 33.

Corollairement, la paroi 22, et, plus précisément, la partie médiane 23 de celle-ci présente, en correspondance, deux fentes 36.

En pratique, le pincement des pattes 35 de la lamelle 29 dans les fentes 36 de la paroi 22 intervient, transversalement, sur les tranches latérales de ces pattes 35, et, pour faciliter leur engagement dans ces fentes 36, ces pattes 35 sont chacune biseautées latéralement par des chanfreins 39 au voisinage de leur bord libre.

En revanche, les fentes 36 de la paroi 22 ont, longitudinalement, une largeur supérieure à l'épaisseur des pattes 35.

En pratique, la lamelle 29 équipant ainsi les moyens d'emboîtement 20 du socle 17 est en métal.

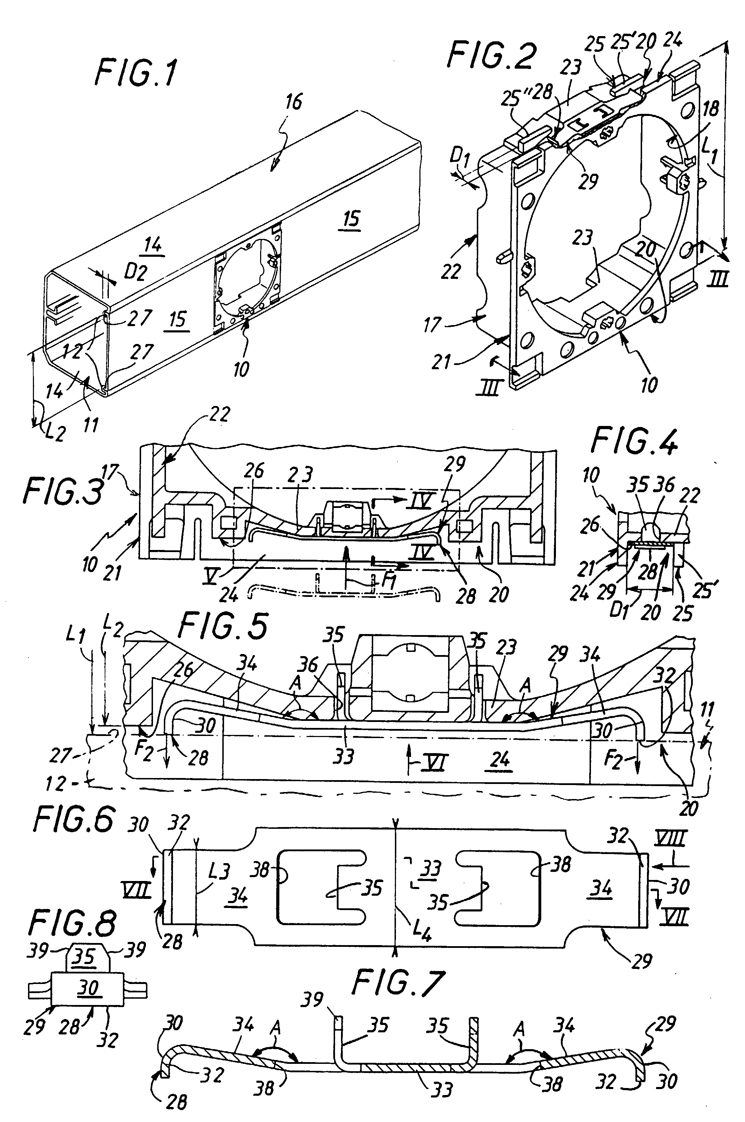

Tel que schématisé par une flèche F1 sur la figure 3, sa mise en place se fait simplement par engagement de ses pattes 35 dans les fentes 36 de la paroi 22.

En service, les moyens d'ancrage 28 que forment les extrémités 30 de cette lamelle 29 mordent sur la tranche 27 du retour 12 correspondant du corps de goulotte 11, sous la sollicitation d'une force élastique qui, tel que schématisé par des flèches F2 sur la figure 5, est due à la déformation élastique dont sont l'objet ses branches latérales 34 lorsque le dispositif de support 10 est en place sur le corps de goulotte 11.

Si désiré, il est possible de moduler cette force élastique en intervenant au dos de la lamelle 29 à l'aide, par exemple, d'un dispositif à coin mobile ou vis non représenté.

Quoi qu'il en soit, cette force élastique se trouve accrue lorsque, un ou des couvercles 15 étant en place, les ailes latérales 14 du corps de goulotte 11 sont rapprochées l'une de l'autre par ce ou ces couvercles 15.

Dans ce qui précède, il a été supposé, par mesure de simplicité, que les retours 12 du corps de goulotte 11 venaient directement des ailes latérales 14 de celui-ci.

Il va de soi, cependant, que l'un au moins des ces retours 12, voire même les deux, peuvent venir, chacun individuellement, d'une quelconque cloison intermédiaire, intervenant, de manière fixe ou amovible, entre ces ailes latérales 14.

Au lieu de s'étendre dans un plan parallèle au fond du corps de goulotte 11, ces retours 12 peuvent en outre s'étendre aussi bien dans un plan plus ou moins oblique par rapport à ce fond.

Il a été supposé, également, dans ce qui précède, que le socle 17 était d'un seul tenant.

Mais, en variante, il pourrait tout aussi bien être formé par exemple de deux pièces qui, ayant en plan un contour en C, se rejoignent l'une l'autre pour former l'évidement central de l'ensemble.

D'une manière plus générale, la présente invention ne se limite évidemment pas à la forme de réalisation décrite et représentée, mais englobe toute variante d'exécution dans le cadre des revendications.

En particulier, la fixation de l'appareillage au support peut être d'un quelconque type déjà connu par ailleurs. Par exemple, le socle peut ne pas comporter l'évidement central de la forme de réalisation plus particulièrement décrite et représentée mais un rail de type rail à profil en oméga.

Le domaine d'application de l'invention ne se limite pas non plus au cas où, tel que plus particulièrement décrit et représenté, les moyens d'emboîtement du dispositif de support sont constitués par des moyens de rainure et forment donc des moyens d'emboîtement femelles.

Il s'étend au contraire aussi bien au cas où il s'agit de moyens d'emboîtement mâles, comme cela est le cas pour les dispositifs de support dont le socle est équipé de jambages constituant de tels moyens d'emboîtement mâles à l'égard des moyens d'emboîtement femelles prévus de manière complémentaire sur le corps de goulotte et formés par exemple par des rainures courant sur les ailes latérales de celui-ci.

## Revendications

1. Dispositif de support pour appareillage à rapporter sur un corps de goulotte (11), du genre comportant, sur deux cotés opposés au moins, des moyens d'emboîtement (20) par lesquels il est apte à venir en prise avec des moyens d'emboîtement (12) complémentaires que comporte ce corps de goulotte (11), caractérisé en ce que, pour l'un au moins des côtés présentant des moyens d'emboîtement (20), il est prévu, en association avec ces moyens d'emboîtement (20), et en saillie suivant leur direction d'emboîtement, pour faire frein sur la partie correspondante du corps de goulotte (11), des moyens d'ancrage (28), c'est-à-dire des moyens qui, tout-en étant de nature à autoriser initialement un éventuel ripage le long de la surface de contact au contact de laquelle ils se trouvent, sont aptes à assurer in fine une immobilisation par rapport à celle-ci.

2. Dispositif de support suivant la revendication 1 et comportant une paroi (22), caractérisé en ce que les moyens d'ancrage (28) appartiennent à une lamelle (29), qui, formée d'une pièce distincte, est rapportée sur ladite paroi (22).

3. Dispositif de support suivant la revendication 2, caractérisé en ce que la lamelle (29) est allongée longitudinalement par rapport aux moyens d'emboîtement (20) auxquels elle est associée, et les moyens d'ancrage (28) sont formés par ses extrémités (30), celles-ci étant à cet effet recourbées en direction opposée à la paroi (22) qui la porte.

4. Dispositif de support suivant la revendication 3, caractérisé en ce que l'une au moins des extrémités (30) de la lamelle (29) formant les moyens d'ancrage (28) présente une tranche (32) droite, et celle-ci s'étend transversalement par rapport aux moyens d'emboîtement (20).

5. Dispositif de support suivant l'une quelconque des revendications 3, 4, caractérisé en ce que, au voisinage, au moins, de ses extrémités (30), la lamelle (29) s'écarte de la paroi (22) qui la porte.

6. Dispositif de support suivant la revendication 5, caractérisé en ce que, la paroi (22) formant latéralement des dégagements, la lamelle (29) présente, d'une part, une partie médiane (33), par laquelle elle est rapportée sur ladite paroi (22), et, d'autre part, deux branches latérales (34), qui s'étendent librement en porte à faux à compter de ladite partie médiane (33) au droit desdits dégagements, en formant avec cette partie médiane (33) un dièdre dont la concavité est tournée vers ladite paroi (22) et dont l'angle (A) est suffisamment ouvert pour qu'elles s'écartent chacune progressivement de celle-ci.

7. Dispositif de support suivant l'une quelconque des revendications 2 à 6, caractérisé en ce que, pour sa fixation à la paroi (22) qui la porte, la lamelle (29) comporte en saillie au moins une patte (35) par laquelle elle est librement engagée à force dans une fente (36) de cette paroi (22).

8. Dispositif de support suivant la revendication 7, caractérisé en ce que la lamelle (29) comporte, à distance l'une de l'autre, en saillie sur sa partie médiane (33), deux pattes (35), et la paroi (22) qui la porte présente en correspondance deux fentes (36).

9. Dispositif de support suivant l'une quelconque des revendications 6 à 8, caractérisé en ce que, par sa partie médiane (33), la lamelle (29) est adossée à la paroi (22) qui la porte.

10. Dispositif de support suivant l'une quelconque des revendications 5, 6, caractérisé en ce qu'il est prévu un dispositif permettant de moduler la force élastique des extrémités (30) de la lamelle (29).

11. Dispositif de support suivant l'une quelconque des revendications 1 à 10, caractérisé en ce qu'il y a des moyens d'ancrage (28) sur chacun des côtés présentant des moyens d'emboîtement (20).

12. Dispositif de support suivant l'une quelconque des revendications 1 à 11, caractérisé en ce que, destiné à être rapporté sur un corps de goulotte (11) à retours (12) dirigés l'un vers l'autre et comportant pour ce faire des moyens de rainure propres à son engagement sur de tels retours (12), les moyens d'emboîtement (20) auxquels sont associés des -moyens d'ancrage (28) sont constitués par ces moyens de rainure.

## Patentansprüche

1. Tragvorrichtung für ein an einem Kabelkanalkörper (11) anzubringendes Gerät, die mindestens an zwei entgegengesetzten Seiten Einsteckmittel (20) aufweist, über die sie mit ergänzenden Einsteckmitteln (12) des Kabelkanalkörpers (11) in Eingriff kommen kann, dadurch gekenzeichnet, daß für mindestens eine der Einsteckmittel (20) aufweisenden Seiten in Kombination mit diesen Einsteckmitteln (20) und in ihrer Einsteckrichtung vorstehend, um eine Bremse auf dem entsprechenden Teil des Kabelkanalkörpers (11) zu bilden, Verankerungsmittel (28) vorgesehen sind, das heißt Mittel, die anfangs ggf. auf der Kontaktfläche, mit der sie sich in Kontakt befinden, ein Verrücken zulassen, zum Schluß jedoch bezüglich dieser eine Blockierung gewährleisten können.

2. Tragvorrichtung nach Anspruch -1 mit einer Wand (22), dadurch gekennzeichnet, daß die Verankerungsmittel (28) zu einer Lamelle (29) gehören, die von einem getrennten Teil gebildet wird und an dieser Wand (22) angebracht ist.

3. Tragvorrichtung nach Anspruch 2, dadurch gekennzeichnet, daß die Lamelle in Längsrichtung bezüglich der Einsteckmittel (20), denen sie zugeordnet ist, langgestreckt ist und daß die Verankerungsmittel (28) von ihren Enden (30) gebildet sind, die zu diesem Zweck in die zu der sie tragenden Wand (22) entgegengesetzten Richtung gebogen sind.

4. Tragvorrichtung nach Anspruch 3, dadurch gekennzeichnet, daß mindestens eines der die Verankerungsmittel (28) bildenden Enden (30) der Lamelle (29) eine gerade Schmalkante (32) aufweist, und daß diese sich quer zu den Einsteckmitteln (20) erstreckt.

5. Tragvorrichtung nach einem der Ansprüche 3, 4, dadurch gekennzeichnet, daß die Lamelle (29) sich mindestens in Nähe ihrer Enden (30) von der sie tragenden Wand (22) entfernt.

6. Tragvorrichtung nach Anspruch 5, dadurch gekennzeichnet, daß, wenn die Wand (22) seitlich Ausnehmungen bildet, die Lamelle (29) einerseits einen Mittelteil (33) besitzt, über den sie an der Wand (22) angebracht ist, und andererseits zwei seitliche Schenkel (34), die sich frei auskragend von diesem Mittelteil (33) aus auf Höhe dieser Ausnehmungen erstrecken, indem sie mit diesem Mittelteil (33) ein Dieder bilden, dessen Konkavität der Wand (22) zugewandt ist und dessen Winkel (A) so offen ist, daß sie sich allmählich von dieser entfernen.

7. Tragvorrichtung nach einem der Ansprüche 2 bis 6, dadurch gekennzeichnet, daß die Lamelle (29) für ihre Befestigung an der sie tragenden Wand (22) vorstehend mindestens einen Lappen (35) aufweist, mit dem sie in einen Schlitz (36) dieser Wand (22) frei eingepreßt ist.

8. Tragvorrichtung nach Anspruch 7, dadurch gekennzeichnet, daß die Lamelle (29) in einem Abstand voneinander an ihrem Mittelteil (33) vorstehend zwei Lappen (35) aufweist und daß die sie tragende Wand (22) in Entsprechung zwei Schlitze (36) aufweist.

9. Tragvorrichtung nach einem der Ansprüche 6 bis 8, dadurch gekennzeichnet, daß die Lamelle (29) mit ihrem Mittelteil (33) an der sie tragenden Wand (22) anliegt.

10. Tragvorrichtung nach einem der Ansprüche 5, 6, dadurch gekennzeichnet, daß eine Vorrichtung vorgesehen ist, die eine Modulierung der Federkraft der Enden (30) der Lamelle (29) gestattet.

11. Tragvorrichtung nach einem der Ansprüche 1 bis 10, dadurch gekennzeichnet, daß auf jeder der Einsteckmittel (20) aufweisenden Seiten Verankerungsmittel (28) vorgesehen sind.

12. Tragvorrichtung nach einem der Ansprüche 1 bis 11, dadurch gekennzeichnet, daß, wenn die Tragvorrichtung dazu bestimmt ist, an einem Kabelkanalkörper (11) mit aufeinander zu gerichteten Abwinklungen (12) befestigt zu werden, und zu diesem Zweck Nuteinrichtungen für ihr Einstecken auf derartigen Abwinklungen (12) aufweist, die Einsteckmittel (20), denen Verankerungsmittel (28) zugeordnet sind, aus diesen Nuteinrichtungen gebildet sind.

## Claims

1. A support device for equipment to be fitted to a duct body (11) of the kind comprising, on two opposite sides at least engagement means (20) by way of which it is capable of coming into engagement with complementary engagement means (12) that the duct body (11) comprises, characterised in that, for one at least of the sides having engagement means (20), there are provided, in association with said engagement means (20) and in projecting relationship in their direction of engagement, to act as a brake on the corresponding part of the duct body (11), anchoring means (28), that is to say means which, while being such as initially to permit possible sliding movement along the contact surface in contact with which they are disposed, are capable of finally providing for immobilisation with respect thereto.

2. A support device according to claim 1 and comprising a wall (22), characterised in that the anchoring means (28) belong to a plate member (29) which, formed by a separate piece, is fitted on to said wall (22).

3. A support device according to claim 2 characterised in that the plate member (29) is elongate longitudinally with respect to the engagement means (20) with which it is associated, and the anchoring means (28) are formed by its ends (30), the latter being for that purpose curved back in the opposite direction to the wall (22) which carries it.

4. A support device according to claim 3 characterised in that one at least of the ends (30) of the plate member (29) forming the anchoring means (28) has a straight edge (32), and the latter extends transversely with respect to the engagement means (20).

5. A support device according to either one of claims 3 and 4 characterised in that in the vicinity at least of its ends (30) the plate member (29) moves away from the wall (22) which carries it.

6. A support device according to claim 5 characterised in that, the wall (22) laterally forming recesses, the plate member (29) has on the one hand a central portion (33), by means of which it is fitted on to said wall (22), and on the other hand two lateral limbs (34) which extend freely in cantilever relationship from said central portion (33) in line with said recesses, forming with said central portion (33) a dihedron whose concavity faces towards said wall (22) and whose angle (A) is sufficiently open for them each to move progressively away therefrom.

7. A support device according to any one of claims 2 to 6 characterised in that, for fixing thereof to the wall (22) which carries it, the plate member (29) comprises in projecting relationship at least one lug (35) by way of which it is freely forcibly engaged in a slot (36) in said wall (22).

8. A support device according to claim 7 characterised in that the plate member (29) comprises two lugs (35) at a spacing from each other in projecting relationship on its central portion (33) and the wall (22) which carries it has two slots (36) at corresponding positions.

9. A support device according to any one of claims 6 to 8 characterised in that the plate member (29) is disposed with its central portion (33) against the wall (22) which carries it.

10. A support device according to either one of claims 5 and 6 characterised in that there is provided a device for modulating the resilient force of the ends (30) of the plate member (29).

11. A support device according to any one of claims 1 to 10 characterised in that there are anchoring means (28) on each of the sides having engagement means (20).

12. A support device according to any one of claims 1 to 11 characterised in that, being intended to be fitted on to a duct body (11) having return portions (12) which are directed towards each other and comprising for that purpose groove means for engagement thereof on such return portions (12), the engagement means (20) with which anchoring means (28) are associated are formed by said groove means.
